# EUROPÄISCHE PATENTSCHRIFT

(11) **EP 3 105 554 B1**
(45) Veröffentlichungstag und Bekanntmachung des Hinweises auf die Patenterteilung: **15.01.2020**
(21) Anmeldenummer: 14703608.1
(22) Anmeldetag: 11.02.2014
(51) Int. Cl.: G01F 23/284, G01S 13/88, G01S 13/42, G01S 13/89, G01S 13/02

(54) **TOPOLOGIEBESTIMMUNG EINER FÜLLGUTOBERFLÄCHE**
DETERMINING A TOPOLOGY OF THE SURFACE OF A MATERIAL FILLED INTO A CONTAINER
DÉTERMINATION DE LA TOPOLOGIE D'UNE SURFACE DE MATIÈRE DE REMPLISSAGE

(43) Veröffentlichungstag der Anmeldung: 21.12.2016
(73) Patentinhaber: VEGA Grieshaber KG, 77709 Wolfach (DE)
(72) Erfinder: WELLE, Roland, 77756 Hausach (DE); DIETERLE, Levin, 77709 Wolfach (DE)
(74) Vertreter: Maiwald Patent- und Rechtsanwaltsgesellschaft mbH
(86) Internationale Anmeldenummer: PCT/EP2014/052641
(87) Internationale Veröffentlichungsnummer: WO 2015/120883

(56) Entgegenhaltungen:
- DE-A1-102004 041 857
- DE-A1-102010 014 457
- US-A1- 2012 281 096

## Beschreibung

### Gebiet der Erfindung

Die Erfindung betrifft Füllstandmessgeräte und die Bestimmung von Füllständen in Behältern durch Bestimmung einer Oberflächentopologie. Anwendungsbereiche der Erfindung können weiterhin im Bereich der Objektüberwachung oder Massestromerfassung sein. Weiterhin betrifft die Erfindung ein Verfahren zum Bestimmen einer Topologie einer Füllgutoberfläche.

### Stand der Technik

Die Erfassung einer Topologie einer Füllgutoberfläche kann insbesondere bei der Messung von Schüttgütern und den dabei oftmals auftretenden Schüttkegeln und Abzugstrichtern innerhalb oder außerhalb geschlossener Behälter vorteilhaft anwendbar sein. Auch bei bewegten Flüssigkeiten kann das Erfassen einer Oberflächentopologie zur Bestimmung von Füllständen oder Volumina anwendbar sein. Derartige bewegte Flüssigkeiten treten beispielsweise beim Einsatz von Rührvorrichtungen und den daraus erzeugten Strömungsbildern an der Flüssigkeitsoberfläche (sogenannte Tromben) in nichttrivialer Art und Weise auf. Eine Bestimmung der Oberflächentopologie kann Rückschlüsse auf weitere Größen, wie beispielsweise eine Viskosität oder eine Durchmischung eines Füllgutes, gegebenenfalls unter Berücksichtigung einer Geschwindigkeit der Rührvorrichtung erlauben.

Verfahren zum berührungslosen Abtasten einer Oberfläche können beispielsweise auf dem Prinzip beruhen, dass ein in Richtung einer Oberfläche ausgesendetes Signal an dieser reflektiert wird und eine Laufzeit und/oder Signalstärke des reflektierten Signals ausgewertet wird. Um eine Topologie einer Füllgutoberfläche mit ausreichender Genauigkeit zu erfassen, kann es notwendig sein, eine Vielzahl von Messungen in Richtung bestimmter Bereiche einer Füllgutoberfläche auszuführen,
das eine Komplexität sowie Kosten für derartige Messvorrichtungen oder Messverfahren erhöhen kann.

DE 10 2004 041 857 A1 beschreibt ein Verfahren und eine Vorrichtung zum Ausrichten eines Messgeräts, um Störreflexionen zu verringern.

DE 10 2010 014 457 A1 beschreibt ein Verfahren zur Bestimmung mindestens einer Eigenschaft eines Mediums in einem Behälter und eine bestimmte Messeinrichtung mit mechanischer Strahlsteuerung.

US 2012/0281096 A1 beschreibt die Topologievermessung einer Füllgutoberfläche mittels eines Radargeräts in Kombination mit einer Infrarotkamera.

### Zusammenfassung der Erfindung

Eine Aufgabe der vorliegenden Erfindung kann darin gesehen werden, eine benötigte Zeit zur Bestimmung einer Topologie einer Füllgutoberfläche zu verringern. Eine weitere Aufgabe kann darin gesehen werden, die Komplexität und Kosten derartiger Füllstandmessgeräte zu senken.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Es wird gemäß einem Aspekt der Erfindung ein Füllstandmessgerät zum Bestimmen einer Topologie einer Füllgutoberfläche in einem Behälter vorgeschlagen. Das Füllstandmessgerät weist eine Antenneneinrichtung zum Senden von elektromagnetischen Signalen und/oder Empfangen von Echos dieser Signale auf. Weiterhin weist das Füllstandmessgerät eine Aufnahmevorrichtung und eine Steuereinheit auf, wobei die Antenneneinrichtung an der Aufnahmevorrichtung befestigt ist und ein oder mehrere Abstrahl- und/oder Empfangswinkel der Antenneneinrichtung relativ zu einer Längsachse der Antenneneinrichtung elektronisch einstellbar sind. Die Aufnahmevorrichtung ist ausgestaltet, eine Position der Antenneneinrichtung relativ zur Füllgutoberfläche einzustellen. Die Steuereinheit ist ausgestaltet, der Antenneneinrichtung elektromagnetische Signale bereitzustellen und/oder von der Antenneneinrichtung Echos dieser Signale zu empfangen. Die Steuereinheit ist weiterhin ausgestaltet, eine resultierende Abstrahl- und/oder Empfangsrichtung des Füllstandmessgerätes relativ zum Behälter dadurch zu verändern, dass eine räumliche Position der Antenneneinrichtung und der Abstrahl- und/oder Empfangswinkel der Antenneneinrichtung gesteuert wird.

Mit anderen Worten wird eine resultierende Abstrahl- und/oder Empfangsrichtung des Füllstandmessgerätes aus einer Kombination einer elektronischen Veränderung der Abstrahl- und/oder Empfangsrichtung der Antenneneinrichtung mit einer mechanischen Bewegung der Antenneneinrichtung im Raum eingestellt.

Es sei in diesem Kontext darauf hingewiesen, dass die elektronische Veränderung der Abstrahl- und/oder Empfangsrichtung der Antenne eines Füllstandmessgerätes in analoger Form, beispielsweise durch Verwendung von Antennenarrays in Verbindung mit geeigneten Phasenschieberschaltungen oder analogen Schaltern, als auch in digitaler Form, beispielsweise durch Antennenarrays in Verbindung mit numerischen Berechnungen auf digitalisierten Empfangskurven oder Echosignale, implementiert werden kann.

Ein Vorteil kann darin gesehen werden, dass durch die Kombination einer mechanischen Positionierung der Antenneneinrichtung mit einer elektronischen Einstellung des Abstrahl- und/oder Empfangswinkels der Antenneneinrichtung eine notwendige Messdauer zur Erfassung von Echosignalen oder Echokurven im Vergleich zu einer rein mechanischen Lösung reduziert werden kann und gleichzeitig die Komplexität eines elektronischen Aufbaus, beispielsweise einer Hochfrequenzschaltung, im Vergleich zu einer rein elektronisch geschwenkten Lösung in akzeptablen Kostengrenzen gehalten werden kann. Mit anderen Worten kombiniert die vorliegende Erfindung die Vorteile einer mechanischen Positionsveränderung einer Antennenanordnung mit den Vorteilen einer elektronischen Veränderung des Empfangswinkels (und/oder ggf. des Abstrahlwinkels) einer Antennenanordnung, beispielsweise durch digitale Strahlformung oder durch analoge Phasenschieber in Verbindung mit Antennenarrays, wobei hier vorteilhafterweise Patchantennen verwendet werden können. Hierdurch kann ein Bauteilaufwand reduziert werden bei gleichzeitiger Verbesserung einer maximal erzielbaren Messrate.

Die Position der Antenneneinrichtung kann dabei beispielsweise die räumliche Lage der Antenneneinrichtung im dreidimensionalen Raum sein, beispielsweise im Inneren eines Behälters über einer Füllgutoberfläche. Dies beinhaltet auch die Möglichkeit einer Rotation um eine eigene Rotationsachse oder auch eine Translationsbewegung.

Unter der Topologie einer Füllgutoberfläche kann die Oberfläche eines Schüttgutes oder der Verlauf oder die Form der Oberfläche eines Schüttgutes verstanden werden, die durch ein Aufschütten oder Ablassen von Schüttgut in/aus einem Behälter entsteht. Derartige Oberflächen können sich beispielsweise auch bei Schüttgut auf Förderbändern oder unregelmäßig ausgeformten Oberflächen bei bewegten Flüssigkeiten finden. Bei den gesendeten elektromagnetischen Signalen kann es sich beispielsweise um Radarsignale im C-Band, K-Band oder W-Band (z.B. 6 Ghz / 24 Ghz / 79 Ghz) handeln, die geeignet sind, an der Füllgutoberfläche zu reflektieren und danach vom Füllstandmessgerät empfangen zu werden. Eine Bestimmung der Topologie kann beispielsweise auf Basis des bekannten Puls-Laufzeit- oder FMCW-Verfahrens erfolgen. Es mag auch möglich sein, die vorgestellten Verfahren mit bekannten Vorrichtungen der Ultraschallmesstechnik zu kombinieren.

Eine Antenneneinrichtung kann beispielsweise eine Patchantenne sein, die eine Vielzahl von einzelnen, kleinen, miteinander kombinierten Einzelstrahlern (sogenannten Patches) kombiniert. Diese Patches können beispielsweise auf einem gemeinsamen Träger oder als Metallschicht einer Leiterplatte angeordnet sein.

Ein Abstrahl- und/oder Empfangswinkel der Antenneneinrichtung kann als der Winkel verstanden werden, der sich aus einer Hauptstrahlrichtung der Antenneneinrichtung relativ zu einer Längserstreckung der Antenneneinrichtung ergibt. Eine Änderung des Abstrahl- und/oder Empfangswinkels kann also ohne mechanische Bewegung oder Veränderung einer Position der Antenneneinrichtung im Raum erreicht werden. Eine elektronische Einstellung des Abstrahlwinkels kann beispielsweise durch Überlagerungseffekte (konstruktive und destruktive Interferenzen) in Kombination mit Phasenverschiebung erreicht werden. Für den Empfangsfall kann die Veränderung der Empfangsrichtung durch eine Phasenverschiebung der einzelnen Empfangskanäle einer Arrayantenne zueinander durch bekannte Algorithmen der digitalen Strahlformung (Digital Beam Forming) erfolgen.

Eine Aufnahmevorrichtung kann beispielsweise eine bewegliche Halterung sein, die es erlaubt, die Antenneneinrichtung bewegbar mit einer Wand des Behälters zu verbinden, sodass eine definierte Position der Antenneneinrichtung relativ zu einem Behälter geschaffen werden kann. In einem Beispiel ist die Aufnahmevorrichtung ein vertikaler Stab, der um seine Längsachse drehbar gelagert ist und an dem an einem zur Füllgutoberfläche gerichteten Ende die Antenneneinrichtung angebracht ist. Die Aufnahmevorrichtung kann eine mechanische Bewegung der Antenneneinrichtung unterstützen, beispielsweise durch eine Drehung der Antenneneinrichtung um eine Drehachse.

Vorzugsweise sollte eine Änderung des Abstrahl- und/oder Empfangswinkels der Antenne in einer Richtung erfolgen, die nicht einer Bewegungsrichtung der mechanischen Bewegung der Antenneneinrichtung entspricht. Idealerweise stehen beide Richtungsachsen senkrecht aufeinander. Dies kann dann eine Erfassung einer Fläche erlauben, beispielsweise durch eine sich daraus ergebende zweidimensionale Veränderung einer resultierenden Abstrahl- und/oder Empfangsrichtung des Füllstandmessgerätes in einer X-Richtung und einer Y-Richtung.

Gemäß einer Ausfuhrungsform der Erfindung ist die Steuereinheit ausgestaltet, eine bestimmte resultierende Abstrahl- und/oder Empfangsrichtung des Füllstandmessgerätes durch das Einstellen der mechanischen Position der Antenneneinrichtung und durch das Einstellen des Abstrahl- und/oder Empfangswinkels der Antenneneinrichtung einzustellen. Mit anderen Worten kann durch ein gezieltes Einstellen eines Abstrahl- und/oder Empfangswinkels der Antenneneinrichtung auf elektronischem Wege und durch die mechanische Positionierung der Antenneneinrichtung im Raum eine bestimmte resultierende Abstrahl- und/oder Empfangsrichtung des Füllstandmessgerätes eingestellt werden, und somit eine definierte Teiloberfläche erfasst werden. Beispielsweise können bestimmte Positions-Abstrahl- und/oder Empfangswinkel-Kombinationen gespeichert sein, um definierte Teiloberflächen abzutasten.

Gemäß einer Ausführungsform der Erfindung erfolgt das elektronische Einstellen mehrerer Abstrahl- und/oder Empfangswinkel unter Verwendung analoger Phasenschieber und/oder analoger Schalter.

Gemäß einer Ausfuhrungsform der Erfindung erfolgt das elektronische Einstellen mehrerer Abstrahl- und/oder Empfangswinkel unter Verwendung digitaler Strahlformungsverfahren.

Gemäß einer Ausführungsform weist die Aufnahmevorrichtung einen Aktuator zum Bewegen der Antenneneinrichtung auf und die Steuereinheit ist ausgestaltet, den Aktuator zu steuern. Ein Vorteil kann darin gesehen werden, dass ein gezieltes Bewegen der Antenneneinrichtung bzw. der Aufnahmevorrichtung zur Einstellung einer bestimmten Position der Antenneneinrichtung möglich sein kann. Der Aktuator kann hierbei an verschiedenen Stellen der Aufnahmevorrichtung angeordnet sein. Dies kann in einem Beispiel auch bedeuten, dass sich die Aufnahmevorrichtung selbst (ohne den Aktuator) nicht bewegt, sondern die Antenneneinrichtung direkt am Aktuator angebracht sein kann.

Gemäß einer Ausfuhrungsform ist die Aufnahmevorrichtung ausgestattet, die Antenneneinrichtung um eine Drehachse zu drehen und der Aktuator ist ein Motor zum Drehen der Aufnahmevorrichtung. Bei dieser vorteilhaften Ausführungsform kann eine Antenneneinrichtung mit vergleichsweise wenig Platzbedarf einen großen Bereich in einem Behälter erfassen.

Gemäß einer Ausführungsform der Erfindung ist die Antenneneinrichtung eine eindimensionale Arrayantenne, die eine längliche Form aufweist.

Gemäß einer Ausführungsform ist die Antenneneinrichtung in ihrer Längserstreckung schräg relativ zur Drehachse angeordnet, so dass ein Winkel zwischen der Längserstreckung der Antenneneinrichtung und der Drehachse ungleich 90° beträgt. Eine solche schräge Anordnung kann den Vorteil haben, dass auch weiter vom Füllstandmessgerät entfernte Oberflächenbereiche einer Füllgutoberfläche mittels digitaler Strahlformung gut erfasst werden können, insbesondere in Kombination mit einer Drehbewegung der Antennenanordnung.

Gemäß einer Ausführungsform der Erfindung beträgt der Winkel zwischen der Längserstreckung und der Antenneneinrichtung und der Drehachse mehr als 45 Grad. Dies kann den Vorteil haben, dass in diesem Winkelbereich eine sehr effektive Erfassung einer Topologie einer Füllgutoberfläche auch bei sehr unterschiedlichen Füllständen möglich ist.

Gemäß einer Ausführungsform der Erfindung sind die Steuereinheit und die Aufnahmevorrichtung ausgestaltet, den Winkel zu verändern. Dies kann beispielsweise durch einen weiteren Aktuator erfolgen, der die Antenneneinrichtung gegenüber der Aufnahmevorrichtung bewegt bzw. einen bestimmten Winkel einstellt. Dies kann ermöglichen, dass Messergebnisse genauer sind, da unterschiedliche Füllstände und Topologien besser berücksichtigt werden können.

Gemäß einer Ausführungsform der Erfindung ist die Steuereinheit ausgestaltet, den Abstrahl- und/oder Empfangswinkel der Antenneneinrichtung durch digitale Strahlformung einzustellen. Hierbei kann durch elektronisches Verändern der verschiedenen hochfrequenten Signale und Überlagerung der abgestrahlten/empfangenen Wellen eine resultierende Abstrahl- und/oder Empfangsrichtung der Antenneneinrichtung beeinflusst werden. Alternativ oder ergänzend kann die Veränderung auch auf nach bekannten Verfahren vorverarbeiteten, niederfrequenten Signalen im Zwischenfrequenzbereich erfolgen. Beispielsweise kann eine Vielzahl von einzelnen Strahlern oder Antennenelementen, die elektronisch miteinander gekoppelt sind, zum Einsatz kommen. Ein Vorteil der digitalen Strahlformung kann darin gesehen werden, dass eine Veränderung des Abstrahlwinkels und/oder des Empfangswinkels der Antenneneinrichtung ohne mechanische Bewegung der Antenneneinrichtung möglich sein kann.

Gemäß einer Ausfuhrungsform der Erfindung ist die Antenneneinrichtung eine eindimensionale Arrayantenne und weist eine längliche Form auf. Ein Vorteil einer solchen Antennenanordnung ist eine vergleichsweise einfache Bauform, die einen ökonomisch sinnvollen Aufwand hinsichtlich der notwendigen elektronischen Bauteile erfordern kann. Durch die längliche Form kann eine Richtung durch Veränderung des Abstrahl-und/oder Empfangswinkels der Antenne beispielsweise eine Dimension in X-Richtung oder Y-Richtung vorteilhaft erfasst werden. Eine hiermit kombinierte mechanische Bewegung kann in diesem Beispiel die jeweils andere Dimension zum Abtasten einer Fläche erfassen.

Gemäß einer Ausführungsform der Erfindung weist die Antenneneinrichtung zur Verbesserung der Fokussierung eine Parabolrinne, eine dielektrische Zylinderlinse und/oder verbreiterte Patches bzw. Antennenelemente auf. Hierdurch können vorteilhafterweise Fokussierungseigenschaften der Antenneneinrichtung verbessert werden, um beispielsweise bestimmte Teiloberflächen der Füllgutoberfläche genauer von anderen Teiloberflächen abgrenzen zu können. Eine bessere Fokussierung kann erlauben, die Größe der Teiloberflächen zu verringern und somit eine höhere Auflösung und/oder Messgenauigkeit bei der Topologiebestimmung der Füllgutoberfläche zu erreichen.

Gemäß einer Ausführungsform, die kein Teil der Erfindung ist, weist das Füllstandmessgerät weiterhin eine Auswerteeinheit auf, die ausgestaltet ist, basierend auf den von der Antenneneinrichtung empfangenen Echosignalen, eine Topologie der Füllgutoberfläche zu berechnen. Diese Auswerteeinheit kann beispielsweise einen Prozessor mit einer Speichereinheit aufweisen, die in Kombination mit einer geeigneten Software aus der Vielzahl der gewonnenen Echosignale eine resultierende Topologie der Füllgutoberfläche errechnet. Ein Vorteil kann darin gesehen werden, dass das Füllstandmessgerät bereits vorverarbeitete Informationen nachfolgenden Anwendungen zur Verfügung stellt. Weiterhin kann dies eine Optimierung der Auswerteeinheit hinsichtlich der Berechnung von Topologien von Füllgutoberflächen erlauben.

Gemäß einer Ausführungsform der Erfindung weist das Füllstandmessgerät einen Positionssensor auf, der ausgestaltet ist, eine räumliche Position der Antenneneinrichtung relativ zum Behälter zu detektieren und der Steuereinheit korrespondierende räumliche Positionsinformationen der Antenneneinrichtung zur Verfügung zu stellen. Derartige Positionsinformationen der Antenneneinrichtung können wichtig sein, um eine Position der jeweils vermessenen Teiloberfläche der Füllgutoberfläche zu bestimmen. Beispielsweise kann ein solcher Positionssensor in einem Aktuator angeordnet sein, der beispielsweise die Winkelposition einer Antriebswelle ermittelt.

Gemäß einem weiteren Aspekt der Erfindung ist ein Füllstandmessgerät zur Erfassung einer Topologie vorgesehen, wobei das Füllstandmessgerät seine hierzu benötigte Energie ausschließlich über eine Zweileiterverbindung bezieht, und wobei die Zweileiterleitung zur Kommunikation, insbesondere zur Ausgabe zumindest eines Topologiemesswertes oder eines daraus abgeleiteten Messwertes (z.B. der Masse im Behälter) ausgeführt ist. Darüber hinaus kann das Füllstandmessgerät eines, mehrere oder alle der oben und im Folgenden beschriebenen Merkmale aufweisen.

Gemäß einem Aspekt der Erfindung wird ein Verfahren zum Bestimmen einer Topologie einer Füllgutoberfläche in einem Behälter vorgeschlagen. Das Verfahren weist die folgenden Schritte auf: Bereitstellen eines radiometrischen Füllstandmessgerätes, Einstellen einer ersten Position der Antenneneinrichtung durch die Steuereinheit und Einstellen eines ersten Abstrahlwinkels der Antenneneinrichtung durch die Steuereinheit. Hierbei sind die Position der Aufnahmevorrichtung und der Abstrahlwinkel der Antenneneinrichtung so eingestellt, dass eine resultierende Abstrahlrichtung des Füllstandmessgerätes in Richtung einer ersten Teiloberfläche der Füllgutoberfläche gerichtet ist. In weiteren Schritten erfolgt ein Aussenden eines ersten elektromagnetischen Signals durch die Steuereinheit und die Antenneneinrichtung in Richtung der Füllgutoberfläche, Empfangen eines ersten Echosignals des ersten elektromagnetischen Signals durch die Antenneneinrichtung und die Steuereinheit und Einstellen einer zweiten Position der Aufnahmevorrichtung und Position der Antenneneinrichtung durch die Steuereinheit und/oder Einstellen eines zweiten Abstrahlwinkels der Antenneneinrichtung. Hierbei ist eine resultierende Abstrahlrichtung des Füllstandmessgerätes in Richtung einer zweiten Teiloberfläche der Füllgutoberfläche gerichtet. In weiteren Schritten erfolgt ein Aussenden eines zweiten elektromagnetischen Signals durch die Steuereinheit und die Antenneneinrichtung in Richtung der zweiten Teiloberfläche der Füllgutoberfläche und ein Empfangen eines zweiten Echosignals des zweiten elektromagnetischen Signals durch die Antenneneinrichtung und die Steuereinheit.

Gemäß einem Aspekt der Erfindung wird ein Verfahren zum Bestimmen einer Topologie einer Füllgutoberfläche in einem Behälter vorgeschlagen. Das Verfahren weist die folgenden Schritte auf: Bereitstellen eines radiometrischen Füllstandmessgerätes, Einstellen einer ersten Position der Antenneneinrichtung durch die Steuereinheit, Einstellen mehrerer Abstrahl- und/oder Empfangswinkel der Antenneneinrichtung und Bestimmen mehrerer Echosignale durch die Steuereinheit. In weiteren Schritten folgt das Einstellen einer zweiten Position der Antenneneinrichtung durch die Steuereinheit, das Einstellen mehrerer Abstrahl- und/oder Empfangswinkel der Antenneneinrichtung und Bestimmen mehrerer weiterer Echosignale durch die Steuereinheit.

In einer Ausführungsform der Erfindung weist das Verfahren den weiteren Schritt des Berechnens einer Topologie einer Füllgutoberfläche mit der Auswerteeinheit basierend auf den von der Antenneneinrichtung empfangenen Echosignale .

Gemäß einem Aspekt der Erfindung wird eine Verwendung eines Füllstandmessgerätes zur Bestimmung einer Viskosität einer bewegten Flüssigkeit vorgeschlagen.

Gemäß eines weiteren Aspektes der Erfindung wird eine Verwendung eines Füllstandmessgerätes zur Bestimmung eines Massestroms eines sich auf einem Förderband befindenden Schüttguts vorgeschlagen.

Gemäß einem Aspekt der Erfindung wird eine Verwendung eines Füllstandmessgerätes zur Bestimmung der Masse oder des Volumens eines Mediums vorgeschlagen.

Das Volumen lässt sich bei bekannter Topologie und vom Benutzer eingegebenen Behälterdaten auf einfache Art und Weise im Füllstandmessgerät berechnen. Die Masse kann aus dem Volumen bei bekannter Dichte des Mediums vom Füllstandmessgerät ebenfalls ermittelt werden.

Im Folgenden werden Ausführungsbeispiele der Erfindung mit Bezug auf die beiliegenden Figuren detailliert beschrieben.

Kurze Beschreibung der Figuren
- Fig. 1: zeigt ein Beispiel eines Füllstandmessgerätes in einem Schüttgutbehälter mit mechanischer Einstellung einer Abstrahlrichtung.
- Fig. 2: zeigt ein Beispiel eines Füllstandmessgerätes in einem Schüttgutbehälter mit elektronischer Einstellung einer Abstrahlrichtung.
- Fig. 3: zeigt ein Füllstandmessgerät gemäß einem Ausführungsbeispiel der Erfindung zur Bestimmung einer Topologie einer Füllgutoberfläche in einem Behälter mit kombinierter mechanischer und elektronischer Einstellung einer Abstrahl- und/oder Empfangsrichtung.
- Fig. 4: zeigt ein Beispiel einer eindimensionalen Arrayantenne gemäß einem Ausführungsbeispiel der Erfindung.
- Fig. 5: zeigt ein Beispiel einer eindimensionalen Arrayantenne gemäß einem Ausführungsbeispiel der Erfindung mit verbreiterten Patches.
- Fig. 6: zeigt ein Beispiel einer eindimensionalen Arrayantenne mit einer dielektrischen Zylinderlinse gemäß einem Ausführungsbeispiel der Erfindung.
- Fig. 7: zeigt ein Beispiel einer eindimensionalen Arrayantenne gemäß einem Ausführungsbeispiel der Erfindung mit einer Parabolrinne als Hauptreflektor und hyperbolisch geformtem Gegenreflektor.
- Fig. 8: zeigt ein Beispiel eines Füllstandmessgerätes gemäß einem Ausführungsbeispiel der Erfindung zur Bestimmung eines Massestroms von Schüttgut auf einem Förderband.
- Fig. 9: zeigt beispielhaft ein Verfahren zum Bestimmen einer Topologie einer Füllgutoberfläche in einem Behälter gemäß einem Ausführungsbeispiel der Erfindung.

Die Zeichnungen sind lediglich schematisch und nicht maßstabsgetreu. Gleiche Bezugszeichen beschreiben ähnliche oder gleiche Teile.

### Detaillierte Beschreibung von Ausführungsbeispielen

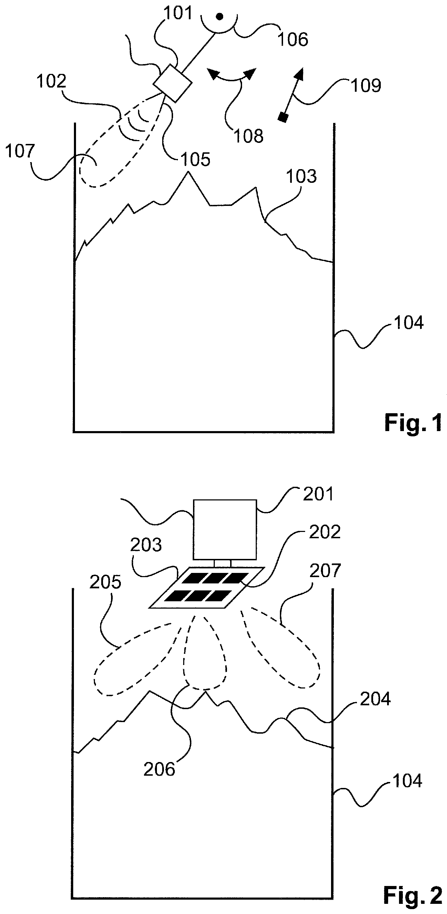

Fig. 1 zeigt ein Beispiel eines Füllstandmessgerätes 101, das über einer Füllgutoberfläche 103 angebracht ist. Die Füllgutoberfläche 103 kann beispielsweise Schüttgut in einem Behälter 104 sein, wodurch sich eine unregelmäßige Struktur oder Form der Füllgutoberfläche 103 ausbilden kann. Das Füllstandmessgerät 101 erfasst durch Aussenden eines Signals 102 in Richtung der Füllgutoberfläche 103 ein Abbild der Reflexionsverhältnisse im Behälter 104. Das Füllstandmessgerät 101 oder zumindest eine Antenneneinrichtung 105 des Füllstandmessgerätes 101 kann in der Lage sein, durch eine entsprechend ausgeführte mechanische Verstelleinrichtung 106 eine Abstrahl- und/oder Empfangsrichtung 107 des Füllstandmessgerätes 101 derart zu verändern, dass die gesamte Füllgutoberfläche 103 des Mediums im Behälter im Rahmen eines Messzyklus ausgemessen werden kann. Dazu kann beispielsweise ein Schwenken des Gerätes in X-Richtung 108 als auch in Y-Richtung 109 möglich sein. Das Füllstandmessgerät 101 bestimmt aus einer Vielzahl der in X-Richtung 108 und Y-Richtung 109 erfassten Echosignale oder Echokurven eine Topologie der Füllgutoberfläche 103. Dies kann beispielsweise ein Höhenverlauf der Füllgutoberfläche 103 in Abhängigkeit der jeweiligen Position sein, welcher beispielsweise durch kartesische Koordinaten X und Y eindeutig definiert werden kann.

In Fig. 2 ist eine weitere Möglichkeit zur Veränderung einer Abstrahlrichtung eines Füllstandmessgerätes 201 gezeigt. Im Gegensatz zum Füllstandmessgerät 101 gemäß Fig. 1 weist das Füllstandmessgerät 201 eine Vielzahl von Antennenelementen 202 auf, welche im Rahmen einer einzigen Antenneneinrichtung 203 realisiert werden können oder auch auf mehrere voneinander getrennt liegende Antennenelemente 202 verteilt sein können. Das Füllstandmessgerät 201 kann für die Bestimmung einer Topologie einer Füllgutoberfläche 204 eines Behälters 104 eine Hauptstrahlrichtung 205, 206, 207 entweder durch gezielte elektronische Veränderung der Ansteuersignale (beispielsweise durch Veränderung der Phasenlage einzelner Ansteuersignale mit analogen Phasenschiebern oder durch gezieltes Abschalten einzelner Ansteuersignale durch analoge Schalter) der einzelnen Antennenelemente 202 und/oder durch digitale Verrechnung (digitale Strahlformung, Digital Beam Forming) der von den einzelnen Antennenelementen 202 erfassten Echosignalen oder Echokurven verändern. Beispielsweise können solche Anordnungen als Antennenarray ausgeführt sein und eine Veränderung einer Hauptstrahl- und/oder Hauptempfangsrichtung 205, 206, 207 kann beispielsweise durch digitale Strahlformung erfolgen.

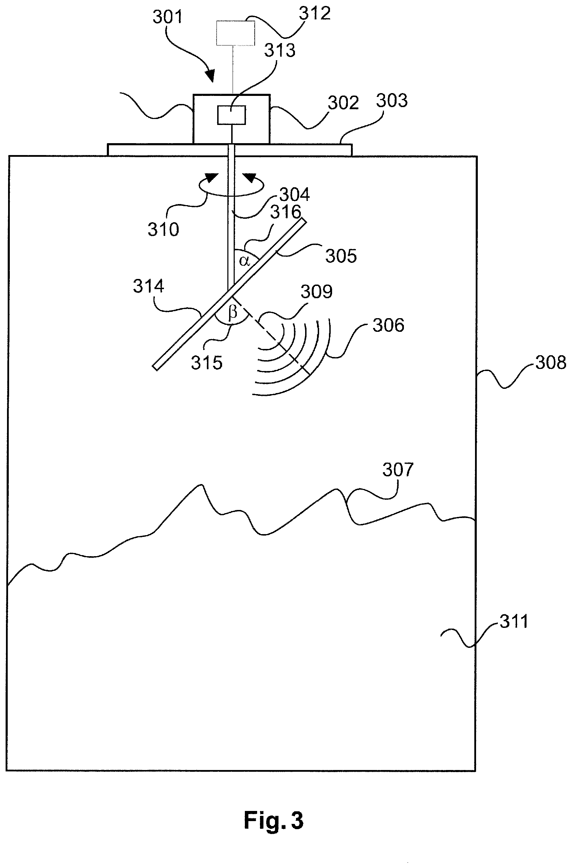

In Fig. 3 ist ein Beispiel eines erfindungsgemäßen Füllstandmessgerätes 301 gezeigt. Das Füllstandmessgerät 301 weist einen Aktuator 313, eine Prozessankopplung 303, eine Aufnahmevorrichtung 304, hier eine drehbare Achse, und eine Antenneneinrichtung 305 auf. Die Prozessankopplung 303 kann zur mechanischen Befestigung des Füllstandmessgerätes 301 am Behälter dienen. Der Aktuator 313 ist ausgeführt, die Antenneneinrichtung 305 zu bewegen. Im hier gezeigten Beispiel ist der Aktuator 313 ein Motor, der die Achse mit der Antenneneinrichtung 305 dreht. Eine Steuereinheit 312 ist ausgeführt, den Aktuator 313 zu steuern und der Antenneneinrichtung 305 hochfrequente Signale zur Verfügung zu stellen und von dieser zu empfangen. Die Antenneneinrichtung 305 strahlt die von der Steuereinheit 312 erzeugten Signale 306 in Richtung einer Füllgutoberfläche 307 ab. Die Steuereinheit 312 ist weiterhin ausgeführt, eine Position der Antenneneinrichtung 305 zu steuern. Weiterhin ist die Steuereinheit 312 ausgestaltet, einen Abstrahl- und/oder Empfangswinkel 315 oder Hauptstrahl- und/oder Hauptempfangsrichtung der Antenneneinrichtung 305 elektronisch einzustellen, sodass eine resultierende Abstrahl- und/oder Empfangsrichtung des Füllstandmessgerätes 301 eingestellt werden kann. In einem Beispiel werden die hochfrequenten Signale in oder an der Antenneneinrichtung 305 erzeugt, beispielsweise innerhalb eines Gehäuses der Antenneneinrichtung 305. In einem weiteren Beispiel erfolgt das Erzeugen der hochfrequenten Signale im räumlichen Bereich des Aktuators 313.

Die Antenneneinrichtung 305 ist über eine Antriebsachse der Aufnahmevorrichtung 304 drehbar gelagert und bildet zu dieser einen Winkel α (316) von ungleich 90° aus. In einem Beispiel beträgt der Winkel α = 45°. Dies kann vorteilhafterweise eine Erfassung von Signalen aus einem weiten Teilbereich des Behälters 308 ermöglichen. Wird beispielsweise mittels digitaler Strahlformung ein Winkelbereich von +/- 45° der Hauptstrahl- und/oder Empfangsrichtung der Antenneneinrichtung 305 eingestellt, kann es in Kombination mit einer Rotation der Antenneneinrichtung 305 möglich sein, den kompletten, das Schüttgut beinhaltenden Halbraum, zu vermessen. Es sind aber auch Winkel kleiner oder größer 45° möglich, um beispielsweise Mehrdeutigkeiten bei der digitalen Strahlformung zu umgehen und/oder die Auflösung der Messung zu verbessern. Weiterhin besteht bei elektronischer Veränderung der Hauptstrahlrichtung und sehr großen Ablenkwinkeln (315) das Problem, dass die Breite der sich ergebenden Antennenkeule massiv zunimmt. Eine elektronische Veränderung der Hauptstrahl- und/oder Empfangsrichtung von bis zu 90° zur Senkrechten ist mit solchen Systemen prinzipiell nicht zu erreichen. Beiderlei Probleme lassen sich mit einer Ausrichtung der Antenneneinrichtung 305 in einem Winkel α (316) von ungleich 90° zu der Antriebsachse vermeiden.

Entlang der Längserstreckung der Antenneneinrichtung 305 können mehrere Antennenelemente 202 (siehe beispielsweise Fig. 2) vorgesehen sein. Jedes Antennenelement 202 kann in der Lage sein, Echosignale aus unterschiedlichen Winkelrichtungen zu verarbeiten. Die von den Antennenelementen 202 jeweils empfangenen Signale können mithilfe bekannter Algorithmen der digitalen Strahlformung dazu verwendet werden, den Empfangswinkel 315 der Antenneneinrichtung 305 in einem vorgegebenen Winkelbereich zu verändern. Der Abstrahl- und/oder Empfangswinkel 315 der Antenneneinrichtung 305 kann beispielsweise eine Hauptstrahlrichtung hinsichtlich des Sendens und des Empfangens von hochfrequenten Signalen beschreiben.

In einem Beispiel ist ein Empfangswinkelbereich (315) von +/- 45° zu einem senkrechten Abstrahlwinkel relativ zur Längserstreckung der Antenneneinrichtung 305 gewählt, sodass bei Berücksichtigung einer zusätzlich stattfindenden Rotation 310 eine gesamte Füllgutoberfläche 307 in kurzer Zeit messtechnisch erfassbar ist. Mit anderen Worten kombiniert die Anordnung in vorteilhafterweise die Vorteile einer mechanischen Veränderung (310) der Abstrahlrichtung mit einer elektronischen Veränderung einer resultierenden Abstrahl-/Empfangsrichtung 309 des Füllstandmessgerätes 301. Mit anderen Worten wird ein durch elektronische Änderung der Hauptempfangsrichtung realisierter Zeilenscanner (mit einem Erfassungswinkel von +/- 45°) mit einer mechanische Rotation gekoppelt. Auf diese Weise können verbesserte Messraten bzw. kürzere Messzeiten erzielt werden. Beispielsweise kann ein solcher Messzyklus zum Bestimmen einer Topologie einer Füllgutoberfläche 307 weniger als zwei Sekunden betragen. Vorteilhaft können hierbei eine mechanisch einfache Konstruktion mit geringen Drehzahlen und eine stark vereinfachte Elektronik, beispielsweise bedingt durch eine eindimensionale Struktur der Antenneneinrichtung 305, sein.

Der Erfindung liegen unter anderem die folgenden Überlegungen zugrunde: Zur ausreichend genauen Erfassung einer Topologie einer Füllgutoberfläche 307 kann es notwendig sein, eine Vielzahl von Messungen auszuführen, die jeweils unterschiedliche Teiloberflächen der zu erfassenden Füllgutoberfläche 307 erfassen, aus deren Gesamtheit sich ausreichend genaue Informationen über die gesamte Füllgutoberfläche 307 ermitteln lassen. In Abhängigkeit von den jeweiligen geometrischen Oberflächenstrukturen, Abmessungen und Formen sollten die jeweiligen Teiloberflächen in ihrer Größe so gewählt sein, dass eine ausreichend genaue Erfassung von Unterschieden in der Füllgutoberfläche 307 möglich ist. Mit anderen Worten kann sich eine Genauigkeit der Topologie erhöhen, wenn die zu erfassenden oder zu messenden Teiloberflächen möglichst klein sind. Andererseits folgt daraus, dass bei steigender Genauigkeit eine große Anzahl an Teiloberflächen und somit eine große Anzahl an einzelnen Messungen notwendig ist. Da dies beispielsweise in einer sequenziellen Messung der einzelnen Teiloberflächen geschehen kann, kann dies teilweise zu sehr langen Messzeiten führen, die beispielsweise im Bereich von einer bis mehreren Minuten liegen können. Bekannte Füllstandmessgeräte weisen oftmals zum Erfassen von Füllgutoberflächen 307 eine hohe technische Komplexität hinsichtlich Elektronik und/oder Mechanik bei oftmals langen Messzeiten auf. Insbesondere bei mechanischen Konstruktionen sind zum Realisieren akzeptabler Messzeiten hohe Bewegungsgeschwindigkeiten der Anordnung notwendig, was zu hoher mechanischer Belastung und frühzeitigem Verschleiß führen kann. Die zuvor genannten Nachteile werden durch die Kombination einer mechanischen Bewegung in einer ersten Dimension und einer elektronischen Veränderung der Hauptstrahl- und/oder Empfangsrichtung in einer zweiten Dimension vermieden.

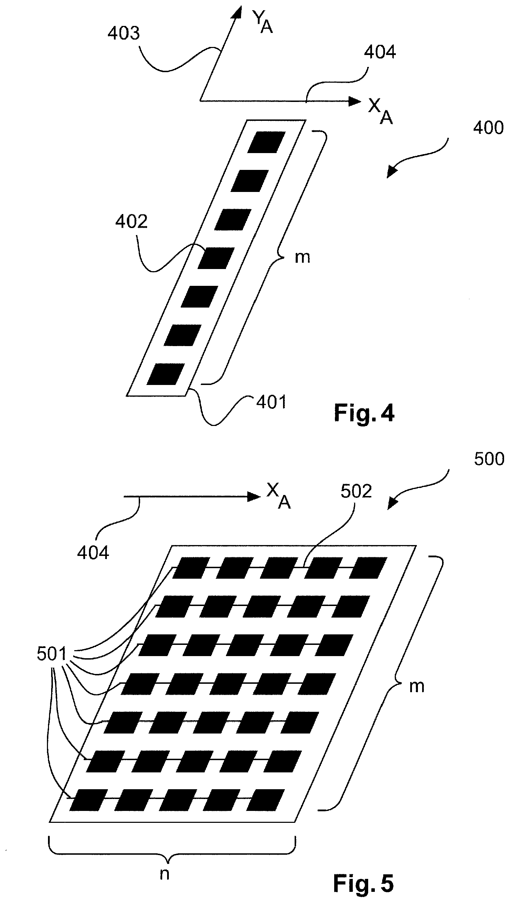

Fig. 4 zeigt ein Beispiel einer Antenneneinrichtung 400, die als eindimensionales Antennenarray 401 ausgestaltet ist und aus m einzelnen Antennenelementen 402 besteht. Die Antennenelemente 401 können durch passend ausgestaltete Leiterplattenpatches oder auch durch geeignete Hohlleiterenden oder sonstige bekannte Abstrahleinrichtungen realisiert sein. In einem Beispiel kann ein in der Mitte des Antennenarrays 401 angeordnetes Antennenelement 402 dazu genutzt werden, in einem möglichst großen Winkelbereich gleichmäßig Hochfrequenzenergie in Richtung einer Füllgutoberfläche 307 auszusenden. Die von der Füllgutoberfläche 307 reflektierten Signale werden von jedem der Antennenelemente 402 empfangen und können gegebenenfalls getrennt voneinander einer Auswerteeinheit (nicht gezeigt) zugeleitet werden. Die Auswerteeinheit ist hierbei in der Lage, durch entsprechende Vorrichtungen die an jedem der m Antennenelemente empfangene Echokurve separat zu erfassen. Anschließend kann die Auswerteeinheit unter Verwendung von digitalen Strahlformungsalgorithmen in der Lage sein, durch Kombination dieser Signale oder Echokurven den Abstrahl-/Empfangswinkel 309 oder Hauptstrahl-/Hauptempfangsrichtung der Antenneneinrichtung 305 zu verändern, insbesondere in einem Winkel von +/- 45° zu einer Senkrechten der Antenneneinrichtung 305. Durch ein eindimensionales Antennenarray 401 kann somit ein Bauteilaufwand zur Realisierung getrennter Sendekanäle und/oder Empfangskanäle durch die Reduktion der üblicherweise zweidimensionalen Arrays 203 (siehe Fig. 2) auf eine einzige Dimension reduziert werden. Typischerweise reicht für die Realisierung der eindimensionalen Arrayzeile eine Anzahl von m <= 20 Elementen aus.

Die eindimensionale Antenne 401 kann durch Anwendung der nachgelagerten Algorithmen zur digitalen Strahlformung eine sehr gute Fokussierung der resultierenden Antennencharakteristik in Richtung der Y(A)-Ausdehnung 403 erreichen. Die Fokussierung in der X(A)-Ausdehnung 404 wirkt in Kombination mit einer Rotation 310 (siehe Fig. 3) in radialer Richtung der Drehung. Eine weitere Verbesserung der Genauigkeit der Messung kann beispielsweise durch eine nachgelagerte Signalverarbeitung erfolgen, wobei die sich durch die Rotation der Antenneneinrichtung 305 ergebende Dopplerverschiebung ausgewertet wird. Derartige Algorithmen können sich zum Beispiel der Prinzipien von SAR (Synthetic Aperture Radar) und ROSAR (Rotor Synthetic Aperture Radar, basierend auf rotierenden Antennen) bedienen, und führen im Resultat zu einer Fokussierung der Empfangscharakteristik in Richtung der X(A)-Ausdehnung 404.

In Fig. 5 ist ein weiteres Beispiel einer Antenneneinrichtung 500 gezeigt, wobei die einzelnen Antennenelemente 503 in X(A)-Richtung 404 verbreitert sind. Mit anderen Worten wird das ursprüngliche eindimensionale Antennenarray 401 in Richtung der X(A)-Achse 404 durch zusätzliche Patches oder zusätzliche Antennenelemente 501 verbreitert. Um einen Aufwand der zugehörigen Ansteuerelektronik gering zu halten, werden die zusätzlichen Patches oder Antennenelemente 501 in einem definierten Abstand zu den bislang verwendeten Antennenelementen 402 angeordnet und durch metallische Verbindungsbahnen 502 fest mit diesen verbunden. Mit anderen Worten wirkt eine Vielzahl miteinander verbundener Patches wie ein einziges Sende-bzw. Empfangselement oder Antennenelemente 402, allerdings mit verbesserten Fokussierungseigenschaften in X(A)-Richtung 404.

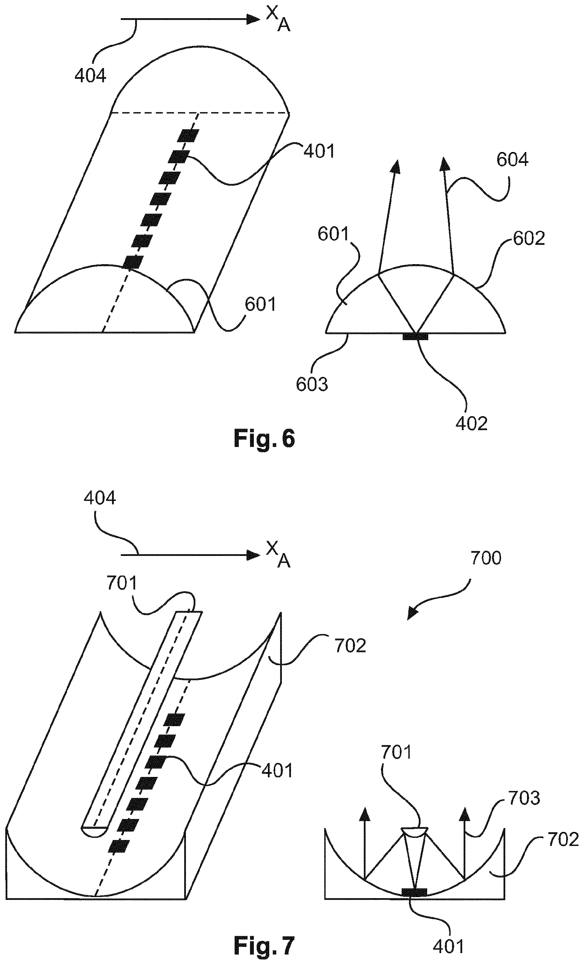

In Fig. 6 ist ein Beispiel einer eindimensionalen Antenneneinrichtung 401 mit einer dielektrischen Zylinderlinse 602 dargestellt. Die Anordnung zeigt eine weitere Ausfuhrungsform zur Fokussierung der Signale entlang der X(A)-Ausdehnung 404. Die Zylinderlinse 602 ist in Abstrahl-Empfangsrichtung an der Antenneneinrichtung 401 angeordnet, sodass ein von einem Antennenelement 402 abgestrahltes Signal 604 sich durch die Zylinderlinse 602 ausbreitet, an einer Grenzfläche der Zylinderlinse 602 gebrochen und die Zylinderlinse 602 durch die gekrümmte Linsenfläche verlässt. Durch die gekrümmte Grenzfläche kann eine effektive Fokussierung der hochfrequenten Strahlung in X(A)-Richtung 404 erreicht werden. Im Empfangsfall erfolgt der Durchlauf des Signals in umgekehrter Reihenfolge.

In Fig. 7 ist eine weitere vorteilhafte Ausgestaltung einer Antennenanordnung 700 dargestellt. Auch diese Anordnung verbessert die Fokussierung der Signale in X(A)-Richtung 404. Hierzu wird eine Parabolrinne 702 in Kombination mit einem entsprechend ausgestatteten und positionierten Gegenreflektor 701 zur Fokussierung eines von der Antenneneinrichtung 401 abgestrahlten Signals 703 verwendet. Hierbei wird das Signal zunächst vom Gegenreflektor 701 (beispielsweise einer hyperbolischen Rinne) reflektiert und danach nochmals an einer Oberfläche der Parabolrinne 702 reflektiert. Dies kann eine effektive Fokussierung des Signals in Richtung der X(A)-Achse 404 ermöglichen.

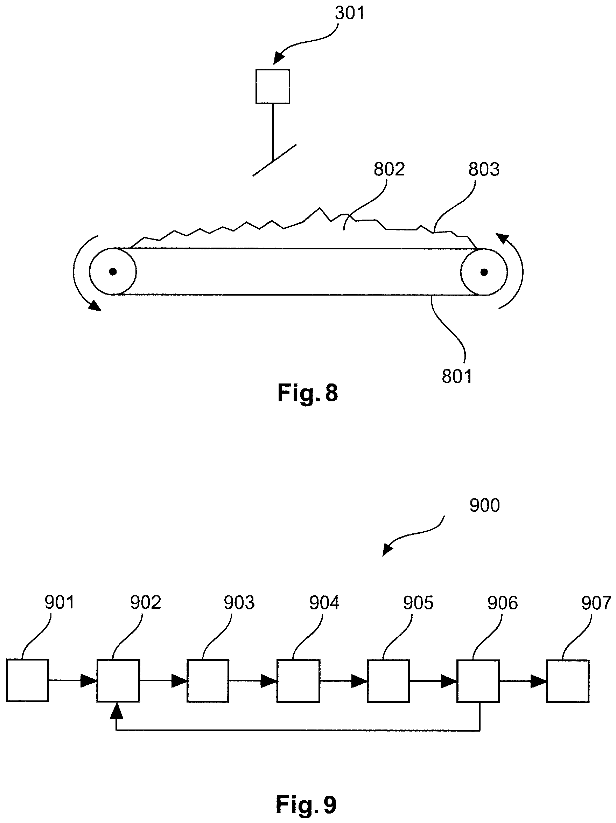

Fig. 8 zeigt beispielhaft eine Verwendung eines erfindungsgemäßen Füllstandmessgerätes 301 zum Bestimmen eines Massestroms von sich bewegendem Schüttgut 802 auf einem Förderband 801. Hierzu wird eine Topologie einer Oberfläche 803 des Schüttguts 802 vom Füllstandmessgerät 301 bestimmt. Aus den Topologieinformationen können über eine Auswerteeinheit (nicht gezeigt) Informationen über Volumina und/oder Masse des Schüttguts gewonnen werden. In diesem Falle kann vorgesehen sein, keine mechanische Verstellung / Rotation der Antenne vorzunehmen. Die Antenne wird in diesem Falle als Zeilenscanner verwendet.

Fig. 9 zeigt ein Beispiel eines Verfahrens zum Bestimmen einer Topologie einer Füllgutoberfläche, beispielsweise in einem Behälter. In diesem Verfahren wird zunächst im Schritt 901 ein radiometrisches Füllstandmessgerät bereitgestellt. Im Schritt 902 wird eine Antenneneinheit um eine beispielsweise vertikale Rotationsachse kontinuierlich oder schrittweise rotiert.. Danach erfolgt im Schritt 903 das Einstellen eines Abstrahlwinkels der Antenneneinrichtung durch die Steuereinheit, wobei die Position der Aufnahmevorrichtung und der Abstrahlwinkel der Antenneneinrichtung so eingestellt sind, dass eine resultierende Abstrahlrichtung des Füllstandmessgerätes in Richtung einer Teiloberfläche der Füllgutoberfläche gerichtet ist. Im Schritt 904 erfolgt ein Aussenden eines elektromagnetischen Signals durch die Steuereinheit und die Antenneneinrichtung in Richtung der Füllgutoberfläche. Im Schritt 905 folgt ein Empfangen eines Echosignals des elektromagnetischen Signals durch die Einzelelemente der Antenneneinrichtung und die Steuereinheit. Hierbei werden zugehörig zu jedem Einzelelement Echokurven erzeugt.

In Schritt 906 werden mittels digitaler Strahlformung Echokurven aus verschiedenen Hauptempfangsrichtungen der Antenneneinheit im zu messenden Winkelbereich mit bekannten Algorithmen der digitalen Strahlformung aus den zuvor erzeugten Echokurven der Einzelempfangselementen errechnet. Dieser Schritt entspricht der Veränderung der Hauptempfangsrichtung in Y(A)-Ausdehnung (403).

Das Verfahren springt dann zurück auf zu Schritt 902, gefolgt von Schritt 903, 904 und 905, gefolgt von einem abermaligen digitalen Scan über den zu messenden Winkelbereich durch digitale Strahlformung 906.

Die Schritte 902-906 können nun so oft durchlaufen werden, bis ein kompletter Datensatz (mehrere digitale Scans entlang der Längsachse der Antenne pro Umdrehung) aufgezeichnet ist.

Letztlich erfolgt im Schritt 907 das Berechnen der Topologie der Füllgutoberfläche mit einer Auswerteeinheit basierend auf den von der Antenneneinrichtung empfangenen und über digitale Strahlformung errechneten Echosignalen. Mit anderen Worten kann ein Gedanke des Verfahrens darin gesehen werden, Teiloberflächen einer Füllgutoberfläche sequenziell abzutasten und auf Basis der gewonnenen Echosignale eine Topologie der Füllgutoberfläche zu bestimmen. Hierzu wird jeweils auf mechanischem Wege eine Position der Antenneneinrichtung, auf elektronischem Wege ein Abstrahl- und/oder Empfangswinkel der Antenneneinrichtung und folglich eine resultierende Abstrahl- und/oder Empfangsrichtung des Füllstandmessgerätes eingestellt.

Ergänzend ist darauf hinzuweisen, dass "umfassend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ein Füllstandmessgerät (301) zum Bestimmen einer Topologie einer Füllgutoberfläche (307), aufweisend:
eine Antenneneinrichtung (305) zum Senden und/oder Empfangen von elektromagnetischen Signalen (306);
eine Aufnahmevorrichtung (304);
eine Steuereinheit (312);
wobei die Antenneneinrichtung (305) an der Aufnahmevorrichtung (304) befestigt ist;
wobei mehrere Abstrahl- und/oder Empfangswinkel (315) der Antenneneinrichtung (305) elektronisch einstellbar sind;
wobei die Aufnahmevorrichtung (304) ausgestaltet ist, eine Position der Antenneneinrichtung (305) relativ zur Füllgutoberfläche (307) mechanisch einzustellen; **dadurch gekennzeichnet, dass** die Steuereinheit (312) ausgestaltet ist, mit Hilfe der Antenneneinrichtung (305), die Abstrahl- und/oder Empfangsrichtung des Füllstandmessgeräts durch eine Kombination einer mechanischen Bewegung der Antenneneinrichtung und einer elektronischen Veränderung der Abstrahl- und/oder Empfangsrichtung der Antenneneinrichtung (305) zu verändern und mehrere Echosignale aus unterschiedlichen Bereichen der Füllgutoberfläche (307) zu erfassen.

2. Füllstandmessgerät (301) gemäß Anspruch 1, wobei das elektronische Einstellen mehrerer Abstrahl- und/oder Empfangswinkel (315) unter Verwendung analoger Phasenschieber und/oder analoger Schalter erfolgt.

3. Füllstandmessgerät(301) gemäß einem der obigen Ansprüche,
wobei das elektronische Einstellen mehrerer Abstrahl- und/oder Empfangswinkel unter Verwendung digitaler Strahlformungsverfahren erfolgt.

4. Füllstandmessgerät (301) gemäß einem der vorhergehenden Ansprüche,
wobei die Aufnahmevorrichtung (304) einen Aktuator (313) zum Bewegen der Antenneneinrichtung (305) aufweist; und
wobei die Steuereinheit (312) ausgestaltet ist, den Aktuator (313) zu steuern.

5. Füllstandmessgerät (301) gemäß Anspruch 4,
wobei die Aufnahmevorrichtung (304) ausgestaltet ist, die Antenneneinrichtung (305) um eine Drehachse zu drehen; und
wobei der Aktuator (313) ein Motor zum Drehen der Aufnahmevorrichtung (304) ist.

6. Füllstandmessgerät (301) gemäß einem der vorhergehenden Ansprüche,
wobei die Antenneneinrichtung (305) eine eindimensionale Arrayantenne (401) ist und eine längliche Form aufweist.

7. Füllstandmessgerät (301) gemäß Anspruch 6,
wobei die Antenneneinrichtung (305) in Ihrer Längserstreckung schräg relativ zur Drehachse angeordnet ist, sodass ein Winkel (316) zwischen der Längserstreckung der Antenneneinrichtung (305) und der Drehachse ungleich 90° beträgt.

8. Füllstandmessgerät (301) gemäß Anspruch 7,
wobei die Antenneneinrichtung (305) in Ihrer Längserstreckung schräg relativ zur Drehachse angeordnet ist, sodass ein Winkel (316) zwischen der Längserstreckung der Antenneneinrichtung (305) und der Drehachse mehr als 45° beträgt.

9. Füllstandmessgerät (301) gemäß einem der vorhergehenden Ansprüche,
wobei die Antenneneinrichtung (305) zur Verbesserung der Fokussierung eine Parabolrinne (702), eine dielektrische Zylinderlinse (602) und/oder verbreiterte Patches (501) aufweist.

10. Füllstandmessgerät (301) gemäß einem der vorhergehenden Ansprüche,
wobei das Füllstandmessgerät (301) einen Positionssensor aufweist, der ausgestaltet ist, eine räumliche Position der Antenneneinrichtung (305) relativ zur Füllgutoberfläche (307) zu detektieren und der Steuereinheit (312) korrespondierende räumliche Positionsinformationen der Antenneneinrichtung (305) zur Verfügung zu stellen.

11. Füllstandmessgerät (201) gemäß einem der vorhergehenden Ansprüche, weiter aufweisend:
eine Energieversorgungs- und Kommunikationsschnittstelle zum Anschluss des Füllstandmessgeräts an eine Zweidrahtleitung, über welche das Füllstandmessgerät mit der für den Messbetrieb notwendigen Energie versorgt werden kann und über welche Messdaten an eine entfernte Steuereinheit übertragen werden können.

12. Verfahren zum Bestimmen einer Topologie einer Füllgutoberfläche, das Verfahren aufweisend die Schritte:
Bereitstellen (901) eines Füllstandmessgerätes gemäß einem der Ansprüche 1 bis 11;
Verändern der Abstrahl- und/oder Empfangsrichtung des Füllstandmessgeräts durch eine Kombination einer mechanischen Bewegung der Antenneneinrichtung und einer elektronischen Veränderung der Abstrahl- und/oder Empfangsrichtung der Antenneneinrichtung (305) und Erfassen von mehreren Echosignale aus unterschiedlichen Bereichen der Füllgutoberfläche (307).

13. Verfahren gemäß Anspruch 12, weiterhin aufweisend den Schritt:
Berechnen (909) einer Topologie einer Füllgutoberfläche mit einer Auswerteeinheit unter Verwendung der von der Antenneneinrichtung empfangenen Echosignale.

14. Verwendung eines Füllstandmessgerätes (301) gemäß einem der Ansprüche 1 bis 11 zur Bestimmung einer Viskosität einer bewegten Flüssigkeit.

15. Verwendung eines Füllstandmessgerätes (301) gemäß einem der Ansprüche 1 bis 11 zur Bestimmung der Masse oder des Volumens eines Mediums.

## Claims

1. Fill level measurement device (301) for determining a topology of a filling material surface (307), comprising:
an antenna apparatus (305) for emitting and/or receiving electromagnetic signals (306);
a receiving device (304);
a control unit (312);
wherein the antenna apparatus (305) is fastened to the receiving device (304);
wherein a plurality of emission and/or receiving angles (315) of the antenna apparatus (305) can be electronically set;
wherein the receiving device (304) is designed to mechanically set a position of the antenna apparatus (305) relative to the filling material surface (307);
**characterized in that**
the control unit (312) is designed, with the aid of the antenna apparatus (305), to change the emission and/or receiving direction of the fill level measurement device by combining mechanically moving the antenna apparatus and electronically changing the emission and/or receiving direction of the antenna apparatus (305) and to record a plurality of echo signals from different regions of the filling material surface (307).

2. Fill level measurement device (301) according to claim 1,
wherein a plurality of emission and/or receiving angles (315) are electronically set using analogue phase shifters and/or analogue switches.

3. Fill level measurement device (301) according to any of the preceding claims,
wherein a plurality of emission and/or receiving angles are electronically set using digital beamforming methods.

4. Fill level measurement device (301) according to any of the preceding claims,
wherein the receiving device (304) comprises an actuator (313) for moving the antenna apparatus (305); and
wherein the control unit (312) is designed to control the actuator (313).

5. Fill level measurement device (301) according to claim 4,
wherein the receiving device (304) is designed to rotate the antenna apparatus (305) about an axis of rotation; and
wherein the actuator (313) is a motor for rotating the receiving device (304).

6. Fill level measurement device (301) according to any of the preceding claims,
wherein the antenna apparatus (305) comprises a unidimensional array antenna (401) and has an elongate shape.

7. Fill level measurement device (301) according to claim 6,
wherein the longitudinal extent of the antenna apparatus (305) is arranged obliquely to the axis of rotation such that an angle (316) between the longitudinal extent of the antenna apparatus (305) and the axis of rotation does not equal 90°.

8. Fill level measurement device (301) according to claim 7,
wherein the longitudinal extent of the antenna apparatus (305) is arranged obliquely to the axis of rotation such that an angle (316) between the longitudinal extent of the antenna apparatus (305) and the axis of rotation is more than 45°.

9. Fill level measurement device (301) according to any of the preceding claims,
wherein the antenna apparatus (305) comprises a parabolic trough (702), a dielectric cylindrical lens (602) and/or widened patches (501) in order to improve focussing.

10. Fill level measurement device (301) according to any of the preceding claims,
wherein the fill level measurement device (301) comprises a position sensor designed to detect a spatial position of the antenna apparatus (305) relative to the filling material surface (307) and to provide the control unit (312) with corresponding spatial positional information relating to the antenna apparatus (305).

11. Fill level measurement device (201) according to any of the preceding claims, further comprising:
a power supply and communication interface for connecting the fill level measurement device to a two-wire line, by means of which the fill level measurement device can be supplied with the power required for the measurement operation and by means of which measured data can be transmitted to a remote control unit.

12. Method for determining a topology of a filling material surface, the method comprising the steps of:
providing (901) a fill level measurement device according to any of claims 1 to 13;
changing the emission and/or receiving direction of the fill level measurement device by combining mechanically moving the antenna apparatus and electronically changing the emission and/or receiving direction of the antenna apparatus (305) and recording a plurality of echo signals from different regions of the filling material surface (307).

13. Method according to claim 12, further comprising the step of:
calculating (909), by means of an evaluation unit, a topology of a filling material surface using the echo signals received by the antenna apparatus.

14. Use of a fill level measurement device (301) according to any of claims 1 to 11 for determining a viscosity of a moving liquid.

15. Use of a fill level measurement device (301) according to any of claims 1 to 11 for determining the mass or volume of a medium.

## Revendications

1. Appareil de mesure de remplissage (301) pour déterminer une topologie d'une surface de matériau de remplissage (307), comportant :
un dispositif d'antenne (305) pour émettre et/ou recevoir des signaux électromagnétiques (306) ;
un moyen de logement (304) ;
une unité de commande (312) ;
dans lequel le dispositif d'antenne (305) est fixé au moyen de logement (304) ;
dans lequel plusieurs angles de rayonnement et/ou de réception (315) du dispositif d'antenne (305) peuvent être réglés électroniquement ;
dans lequel le moyen de logement (304) est configuré pour régler mécaniquement une position du dispositif d'antenne (305) par rapport à la surface de matériau de remplissage (307) ;
**caractérisé en ce que** l'unité de commande (312) est configurée pour modifier, à l'aide du dispositif d'antenne (305), la direction de rayonnement et/ou de réception de l'appareil de mesure de remplissage par une combinaison d'un mouvement mécanique du dispositif d'antenne et d'une variation électronique de la direction de rayonnement et/ou de réception du dispositif d'antenne (305) et pour saisir plusieurs signaux d'écho provenant de différentes zones de la surface de matériau de remplissage (307).

2. Appareil de mesure de remplissage (301) selon la revendication 1, dans lequel le réglage électronique de plusieurs angles de rayonnement et/ou de réception (315) s'effectue en utilisant un déphaseur analogique et/ou un commutateur analogique.

3. Appareil de mesure de remplissage (301) selon l'une des revendications ci-dessus, dans lequel le réglage électronique de plusieurs angles de rayonnement et/ou de réception s'effectue en utilisant un procédé numérique de formation de faisceau.

4. Appareil de mesure de remplissage (301) selon l'une des revendications précédentes, dans lequel le moyen de logement (304) comporte un actionneur (313) pour le dispositif d'antenne (305) à mouvoir ; et dans lequel l'unité de commande (312) est configurée pour commander l'actionneur (313).

5. Appareil de mesure de remplissage (301) selon la revendication 4, dans lequel le moyen de logement (304) est configuré pour faire tourner le dispositif d'antenne (305) autour d'un axe de rotation ; et dans lequel l'actionneur (313) est un moteur pour la rotation du moyen de logement (304).

6. Appareil de mesure de remplissage (301) selon l'une des revendications précédentes, dans lequel le dispositif d'antenne (305) est une antenne-réseau unidimensionnelle (401) et possède une forme allongée.

7. Appareil de mesure de remplissage (301) selon la revendication 6, dans lequel le dispositif d'antenne (305) est agencé en biais par rapport à l'axe de rotation dans son étendue longitudinale, de sorte qu'un angle (316) entre l'étendue longitudinale du dispositif d'antenne (305) et l'axe de rotation est différent de 90°.

8. Appareil de mesure de remplissage (301) selon la revendication 7, dans lequel le dispositif d'antenne (305) est agencé en biais par rapport à l'axe de rotation dans son étendue longitudinale, de sorte qu'un angle (316) entre l'étendue longitudinale du dispositif d'antenne (305) et l'axe de rotation est supérieur à 45°.

9. Appareil de mesure de remplissage (301) selon l'une des revendications précédentes, dans lequel le dispositif d'antenne (305) comporte une parabole linéaire (702), une lentille cylindrique diélectrique (602) et/ou des patchs élargis (501) pour améliorer la focalisation.

10. Appareil de mesure de remplissage (301) selon l'une des revendications précédentes, dans lequel l'appareil de mesure de remplissage (301) comporte un capteur de position, lequel est configuré pour détecter une position spatiale du dispositif d'antenne (305) par rapport à la surface de matériau de remplissage (307) et pour fournir à l'unité de commande (312) des informations correspondantes de position spatiale du dispositif d'antenne (305).

11. Appareil de mesure de remplissage (201) selon l'une des revendications précédentes, comportant en outre :
une interface d'alimentation en énergie et de communication pour le raccordement de l'appareil de mesure de remplissage à un conducteur à deux fils, par le biais duquel l'appareil de mesure de remplissage peut être alimenté avec énergie nécessaire à son fonctionnement et par le biais duquel des données de mesures peuvent être transmises à une unité de commande distante.

12. Procédé de détermination d'une topologie d'une surface de matériau de remplissage, le procédé comportant les étapes de :
disposition (901) d'un appareil de mesure de remplissage selon l'une des revendications 1 à 11 ;
modification de la direction de rayonnement et/ou de réception de l'appareil de mesure de remplissage par une combinaison d'un mouvement mécanique du dispositif d'antenne et d'une variation électronique de la direction de rayonnement et/ou de réception du dispositif d'antenne (305) et saisie de plusieurs signaux d'écho provenant de différentes zones de la surface de matériau de remplissage (307).

13. Procédé selon la revendication 12 comprenant en outre l'étape de :
calcul (909) d'une topologie d'une surface de matériau de remplissage avec une unité de traitement en utilisant les signaux d'écho reçus par le dispositif d'antenne.

14. Utilisation d'un appareil de mesure de remplissage (301) selon l'une des revendications 1 à 11 pour déterminer la viscosité d'un fluide mis en mouvement.

15. Utilisation d'un appareil de mesure de remplissage (301) selon l'une des revendications 1 à 11 pour déterminer la masse ou le volume d'un milieu.
